# EUROPEAN PATENT APPLICATION

(11) **EP 4 838 753 A1**
(43) Date of publication of application: **11.11.2026**
(21) Application number: 25851079.1
(22) Date of filing: 23.06.2025
(51) Int. Cl.: H02J 13/00, G06Q 50/06, H02J 3/14, H02J 3/38

(54) **POWER CONSUMPTION MEASUREMENT SYSTEM**

(30) Priority: 08.08.2024 JP 2024132754
(71) Applicant: Fuji Electric Co., Ltd., Kawasaki-shi, Kanagawa 210-9530 (JP)
(72) Inventor: KATOH, Taisuke, Kawasaki-shi, Kanagawa 210-9530 (JP); TAKAHASHI, Hiroshi, Kawasaki-shi, Kanagawa 210-9530 (JP)
(74) Representative: Appelt, Christian W.
(86) International application number: PCT/JP2025/022490
(87) International publication number: WO 2026/034029

(57) **Abstract**

Calculation system that calculates an emission reduction contribution amount of an electric system is provided with a material for determining whether there is a change in an electrical device constituting the electric system. The measurement unit 11 measures power consumption of each of the plurality of electrical devices 21 constituting the electric system 20. A collection unit 12 collects information of power consumption measured by the measurement unit 11, and sends the collected information of power consumption to a carbon dioxide emission reduction contribution amount calculation system 30. Note that the carbon dioxide emission reduction contribution amount calculation system 30 calculates the emission reduction contribution amount of carbon dioxide gas emitted by the electric system 20. An authentication processing unit 13 returns authentication information for each of the plurality of electrical devices 21 in response to a request from the carbon dioxide emission reduction contribution amount calculation system 30.

## Description

### Technical Field

The present invention relates to an information processing technique.

### Background Art

Various techniques for contributing to reduction of carbon dioxide emitted by energy consumption have been proposed (refer to, for example, Patent Literatures 1 to 3). In addition, a method for evaluating a reduction contribution amount in reducing greenhouse gas emission by such a technique has been proposed (refer to, for example, Non-Patent Literature 1).

### Citation List

### Patent Literature

Patent Literature 1: Japanese Patent No. 5408077
Patent Literature 2: Japanese Laid-open Patent Publication No. 2009-217450
Patent Literature 3: Japanese Patent No. 7348421

Non Patent Literature

Non Patent Literature 1: LCA Society of Japan, "Guidelines for Calculating Greenhouse Gas Emission Reduction Contribution Amount", LCA Society of Japan, second edition, March 8, 2022

### Summary of Invention

### Technical Problem

Examples of industrial facilities for achieving production and conveyance of articles include an electrical system including a plurality of electrical devices such as drive devices. Such an electrical system includes a motor, an inverter, and the like each serving as an energy-consuming drive device, or a machine tool, a conveyor, a conveyance robot, an automated guided vehicle (AGV), and the like each serving as a machine facility including the motor and the inverter.

In order to reduce energy consumed in the production and conveyance of articles, it is important to optimize the energy consumption of an electrical device by optimally controlling the operation of the electrical device.

On the other hand, in recent years, reduction of the emission amount of greenhouse gas is widely demanded. The emission amount of greenhouse gas emitted by generation of energy consumed by an electrical device is reduced, for example, by changing a production process or a conveyance process of an article. The reduction amount by implementation of such a method is referred to as a reduction contribution amount (avoided emissions). For example, the reduction contribution amount is widely used as an index for appealing the achievement of an approach to environmental problems, and is desired to be obtained as a more practical value.

In this regard, in Japan, methods of formulating a greenhouse gas emission amount are being developed in the chemical industry and the electrical and electronic industry. However, these methods are specialized in a specific industry, and are not related to calculation of the greenhouse gas emission reduction contribution amount of the entire industry.

In the LCA Society of Japan and the World Business Council for Sustainable Development (WBCSD), participating companies are taking the lead in organizing the way of thinking regarding the greenhouse gas emission reduction contribution amount of the entire industry. In addition, the LCA Society of Japan and the WBCSD have studied the ideal method of evaluating the greenhouse gas emission reduction contribution amount, and have published a summary thereof. For example, the LCA Society of Japan has published Non-Patent Literature 1 described above.

Non-Patent Literature 1 summarizes the evaluation of the greenhouse gas emission amount, and describes that the reduction contribution amount can be calculated by multiplying the following three items.
1. Net greenhouse gas emission reduction amount compared to baseline by life cycle evaluation per functional unit of final product or the like exhibiting reduction effect
2. Penetration amount of final product or the like exhibiting reduction effect
3. Contribution rate of product or the like to be evaluated

In addition, regarding the setting of a baseline, Non-patent Literature 1 describes the setting of a baseline as follows in principle.

"A product or the like that would have become widespread if there were no product or the like to be evaluated (a target device) is defined as a product or the like to be compared (a base device). When the product or the like to be evaluated (the target device) is a final product or the like exhibiting a reduction effect, the product or the like to be compared (the base device) is defined as a baseline. The baseline needs to have the same function as the final product or the like exhibiting the reduction effect."

Here, a case will be considered in which the calculation of the reduction contribution amount in reducing greenhouse gas emission is continuously performed with each electrical device constituting the above-described electric system as the target device. In this case, for example, an electrical device actually operating at a certain time is adopted as the base device serving as the baseline. Therefore, in order to continuously calculate the reduction contribution amount according to the above principle, functional equivalence with the electrical device that is the base device needs to be maintained in the target device.

### Solution to Problem

A power consumption measurement system according to an embodiment includes a measurement unit, a collection unit, and an authentication processing unit. The measurement unit measures power consumption of each of a plurality of electrical devices constituting an electric system. The collection unit collects information of power consumption measured by the measurement unit, and sends the collected information of power consumption to a calculation system. Note that the calculation system calculates the emission reduction contribution amount of carbon dioxide gas emitted by the electric system. The authentication processing unit returns authentication information for each of the plurality of electrical devices in response to a request from the calculation system.

### Advantageous Effects of Invention

According to the above aspect, it is possible to provide a calculation system that calculates an emission reduction contribution amount of an electric system with a material for determining whether there is a change in an electrical device constituting the electric system.

### Brief Description of Drawings

Fig. 1 is a diagram illustrating an example of a functional configuration of a power consumption measurement system.
Fig. 2 is a diagram illustrating a first example of a physical configuration of the power consumption measurement system.
Fig. 3 is a diagram illustrating a first example of an installation mode of a slave unit.
Fig. 4 is a diagram illustrating a hardware configuration example of an information processing device.
Fig. 5 is a flowchart illustrating processing contents of an example of measurement processing.
Fig. 6 is a flowchart illustrating processing contents of an example of collection processing.
Fig. 7 is a diagram illustrating a second example of a physical configuration of the power consumption measurement system.
Fig. 8 is a diagram illustrating a second example of the installation mode of the slave unit.
Fig. 9 is a diagram illustrating a third example of the installation mode of the slave unit.
Fig. 10 is a diagram illustrating a fourth example of the installation mode of the slave unit.
Fig. 11 is a diagram illustrating a first arrangement example of an authentication processing unit.
Fig. 12 is a diagram illustrating a second arrangement example of the authentication processing unit.
Fig. 13 is a diagram illustrating a third arrangement example of the authentication processing unit.
Fig. 14 is a flowchart illustrating processing contents of an example of authentication processing.

### Description of Embodiments

Hereinafter, embodiments will be described in detail with reference to the drawings.

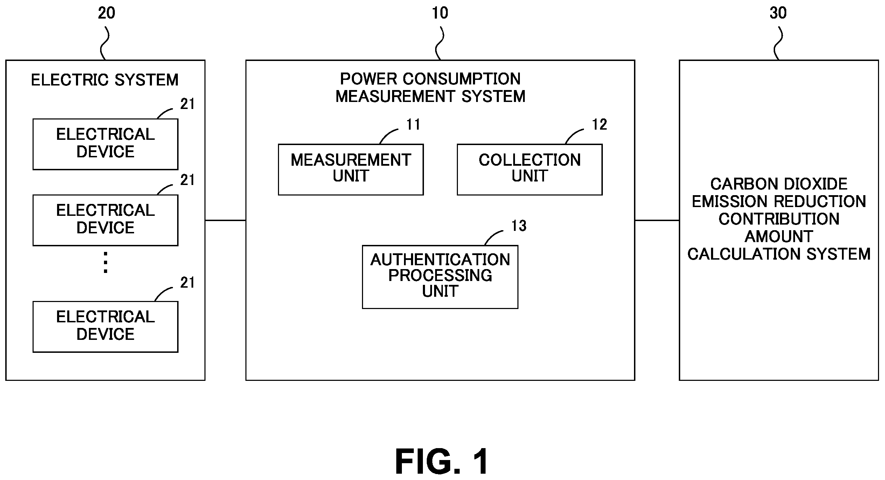

Fig. 1 illustrates an example of a functional configuration of a power consumption measurement system 10 that implements the present invention.

In Fig. 1, the power consumption measurement system 10 is connected to each of an electric system 20 and a carbon dioxide emission reduction contribution amount calculation system 30, and is capable of exchanging various kinds of information with these systems.

The power consumption measurement system 10 includes a measurement unit 11, a collection unit 12, and an authentication processing unit 13 as functional components.

The electric system 20 includes a plurality of electrical devices 21.

The carbon dioxide emission reduction contribution amount calculation system 30 calculates an emission reduction contribution amount which is a reduction amount contributed by the electric system 20 in reducing the emission amount of carbon dioxide gas which is a greenhouse gas emitted from generation of electric power supplied to the electric system 20.

In the following description, the power consumption measurement system 10 and the carbon dioxide emission reduction contribution amount calculation system 30 may be simply referred to as a "measurement system 10" and a "calculation system 30", respectively.

The measurement unit 11 measures power consumption of each of the plurality of electrical devices 21 constituting the electric system 20.

The collection unit 12 collects information of power consumption measured by the measurement unit 11, and sends the collected information of power consumption to the calculation system 30.

With these components, the power consumption measurement system 10 provides information of power consumption of each electrical device 21 constituting the electric system 20 to the calculation system 30. The calculation system 30 calculates the current emission amount of carbon dioxide gas for the electric system 20 using the provided information, and calculates a difference between the calculated emission amount and the emission amount by a base system registered in advance as the reduction contribution amount. Note that information of power consumption of the base system may be registered in advance in the calculation system 30, and the emission amount of carbon dioxide gas by the base system may be calculated using the registered information of power consumption and used for calculation of the reduction contribution amount.

Note that the current emission amount of carbon dioxide gas for the electric system 20 may be calculated by the power consumption measurement system 10 as described later instead of the calculation system 30, and the calculated emission amount may be provided to the calculation system 30.

The authentication processing unit 13 performs a process of returning authentication information for each of the plurality of electrical devices 21 in response to a request from the calculation system 30. The authentication information of the electrical device 21 is, for example, identification information of the electrical device 21 including information of its own model name, model number, and serial number.

The calculation system 30 determines whether the electrical device 21 to be measured by the measurement unit 11, which is identified by the authentication information returned from the authentication processing unit 13, can guarantee objective reliability, that is, whether functional equivalence with the base system is maintained. This determination is made, for example, by registering authentication information of the electrical device 21 that can guarantee objective reliability in the calculation system 30 in advance, and determining whether the authentication information returned from the authentication processing unit 13 matches the registered authentication information. Here, in a case where the returned authentication information does not match the registered authentication information, the reduction contribution amount calculated on the basis of the information of power consumption sent from the collection unit 12 is treated as information not having objective reliability.

Details of the authentication processing unit 13 will be described later.

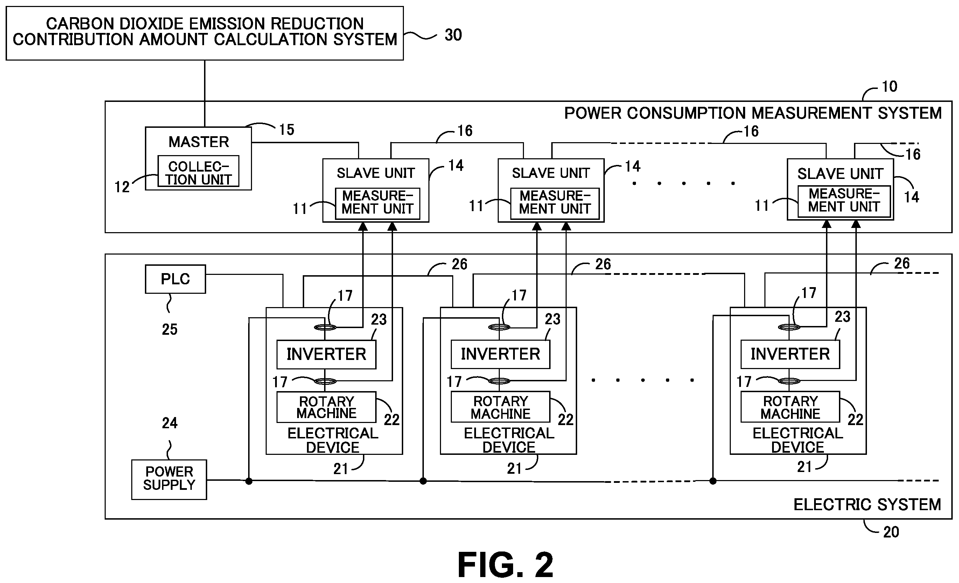

Next, a first example of a physical configuration of the measurement system 10 will be described with reference to Fig. 2.

First, the configuration of the electric system 20 will be described in detail with reference to Fig. 2.

In the present embodiment, each of the plurality of electrical devices 21 constituting the electric system 20 includes a rotary machine 22 and an inverter 23 that supplies electric power to the rotary machine 22 to operate the rotary machine 22. The electric system 20 includes a power supply 24 that supplies electric power to the plurality of electrical devices 21 and a PLC 25 that controls the operation of the plurality of electrical devices 21. Note that "PLC" is an abbreviation for program logic controller. Here, the PLC 25 is a control unit that controls the operation of the plurality of electrical devices 21 by sending control information transmitted through a control signal line 26 daisy-chain-connecting the plurality of electrical devices 21.

The measurement system 10 includes, as a physical configuration, a combination of a slave unit 14 and a master unit 15.

The slave unit 14 is provided one each for the plurality of electrical devices 21, has the function of the measurement unit 11, and measures the power consumption of the corresponding electrical device 21.

In the present embodiment, the slave unit 14 obtains a power consumption value of the electrical device 21 by actually measuring the voltage applied from the power supply 24 to the inverter 23 included in the electrical device 21 and the inflow current using a sensor 17 and calculating a value obtained by multiplying these measured values. Note that the slave unit 14 may obtain the power consumption value of the rotary machine 22 by further actually measuring the voltage applied from the inverter 23 to the rotary machine 22 included in the electrical device 21 and the inflow current using the sensor 17 and calculating a value obtained by multiplying these measured values. Further, the slave unit 14 may obtain the power consumption value of the inverter 23 by calculating a value obtained by subtracting the power consumption value of the rotary machine 22 from the power consumption value of the electrical device 21.

Note that the electric power for driving the master unit 15 may be obtained from a commercial power source or from the power supply 24 of the electric system 20. The electric power of the slave unit 14 may be obtained from a voltage measured by the sensor 17 or from the master unit 15 through a data signal line 16.

The master unit 15 has the function of the collection unit 12, collects information of power consumption of the electrical device 21 measured by the slave unit 14, and sends the collected information of power consumption to the calculation system 30. The master unit 15 collects information of power consumption of the electrical devices 21 through the data signal line 16 daisy-chain-connecting the plurality of slave units 14.

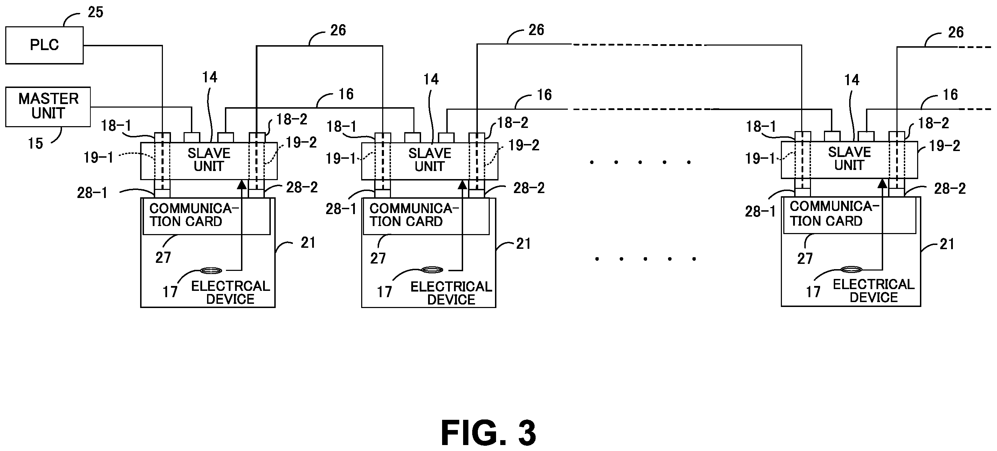

The first example illustrated in Fig. 2 has a daisy-chain connection for each of the data signal line 16 and the control signal line 26. In such a configuration, the slave unit 14 is coupled to and held by the electrical device 21 by, for example, a dedicated mounting jig. Alternatively, the slave unit 14 may be coupled to the electrical device 21 in the installation mode as in the first example illustrated in Fig. 3.

First, a communication card 27 will be described with reference to Fig. 3.

The communication card 27 is attached to the electrical device 21 to provide the electrical device 21 with a communication interface. The communication card 27 receives control information from the PLC 25 from the upstream side of the daisy-chain connection of the control signal line 26 and transmits the control information to the downstream side of the daisy-chain connection of the control signal line 26. When attached to electrical device 21, the communication card 27 is connected to a first receptacle 28-1 and a second receptacle 28-2 provided in the electrical device 21. The first receptacle 28-1 is capable of connecting a first plug connector 18-1 provided at the end of the cable upstream in the daisy-chain connection of the control signal line 26. The second receptacle 28-2 is capable of connecting a second plug connector 18-2 provided at the end of the cable downstream in the daisy-chain connection of the control signal line 26.

When the first plug connector 18-1 and the second plug connector 18-2 are directly connected to the first receptacle 28-1 and the second receptacle 28-2, respectively, the electrical device 21 will join the daisy-chain connection for the control signal line 26. However, in the example of Fig. 3, the first plug connector 18-1 is connected to the first receptacle 28-1 via a first relay connector 19-1, and the second plug connector 18-2 is connected to the second receptacle 28-2 via a second relay connector 19-2.

The first relay connector 19-1 and the second relay connector 19-2 are both connectors that relay control information transmitted through the control signal line 26, and are provided in the slave unit 14. The first relay connector 19-1 is capable of connecting the first plug connector 18-1 and the first receptacle 28-1 to both ends thereof, respectively.

In the example of Fig. 3, the slave unit 14 is coupled to and held by the electrical device 21 by connection of the first relay connector 19-1 and the second relay connector 19-2 with the first receptacle 28-1 and the second receptacle 28-2, respectively. In addition, by these connections and the respective connections of the first relay connector 19-1 and the second relay connector 19-2 with the first plug connector 18-1 and the second plug connector 18-2, the electrical device 21 is added to the daisy-chain connection for the control signal line 26. Such an installation mode of the slave unit 14 eliminates the need for the mounting jig as described above.

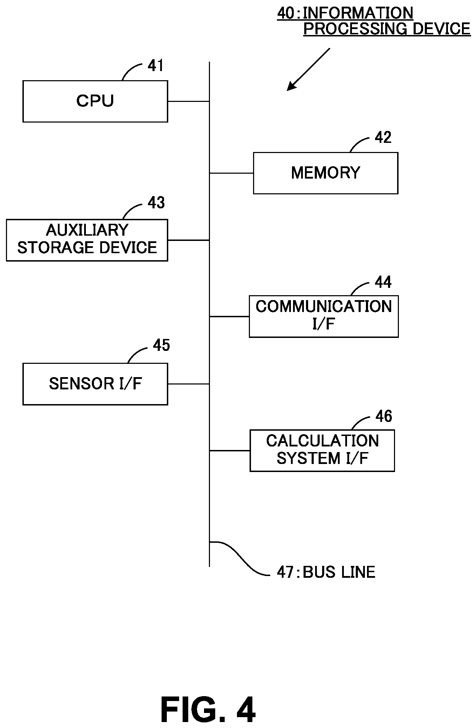

Next, a hardware configuration example of an information processing device 40 included in the slave unit 14 and the master unit 15 will be described with reference to Fig. 4.

In the present embodiment, the slave unit 14 includes the information processing device 40 that functions as the measurement unit 11, and the master unit 15 includes the information processing device 40 that functions as the collection unit 12.

In the configuration example of Fig. 4, the information processing device 40 includes components such as a CPU 41, a memory 42, an auxiliary storage device 43, a communication I/F 44, a sensor I/F 45, and a calculation system I/F 46. Each component is connected to a bus line 47, and is capable of exchanging various types of data between the components. Note that "CPU" is an abbreviation for central processing unit. Note that "I/F" is an abbreviation for interface.

The CPU 41 controls each hardware component of the information processing device 40 by executing a predetermined program using the memory 42, for example, and can provide various functions.

The memory 42 is, for example, a semiconductor memory, and includes a RAM area and a ROM area. Note that "RAM" is an abbreviation for random access memory. "ROM" is an abbreviation for read only memory.

The auxiliary storage device 43 is a nonvolatile storage device, and is, for example, a flash memory.

The communication I/F 44 transmits and receives various types of data to and from another device in accordance with an instruction transmitted from the CPU 41. For example, the communication I/F 44 provides an interface for data communication performed through a daisy-chain connection for the data signal line 16. In the present embodiment, the data communication is performed using a general-purpose communication protocol such as industrial Ethernet (registered trademark) like EtherCAT (registered trademark). Furthermore, the information processing device 40 included in the master unit 15 further provides an interface for data communication with the calculation system 30. In the present embodiment, this data communication is also performed using a general-purpose communication protocol such as Ethernet.

The sensor I/F 45 provides an interface with the sensor 17 used for measuring power consumption. Note that the sensor I/F 45 is unnecessary in the information processing device 40 included in the master unit 15.

The calculation system I/F 46 provides an interface with the above-described calculation system 30. Note that the calculation system I/F 46 is unnecessary in the information processing device 40 included in the slave unit 14.

Next, contents of various types of processing performed by the information processing device 40 will be described. These processing steps are achieved, for example, by the CPU 41 reading and executing a predetermined program stored in advance in the auxiliary storage device 43.

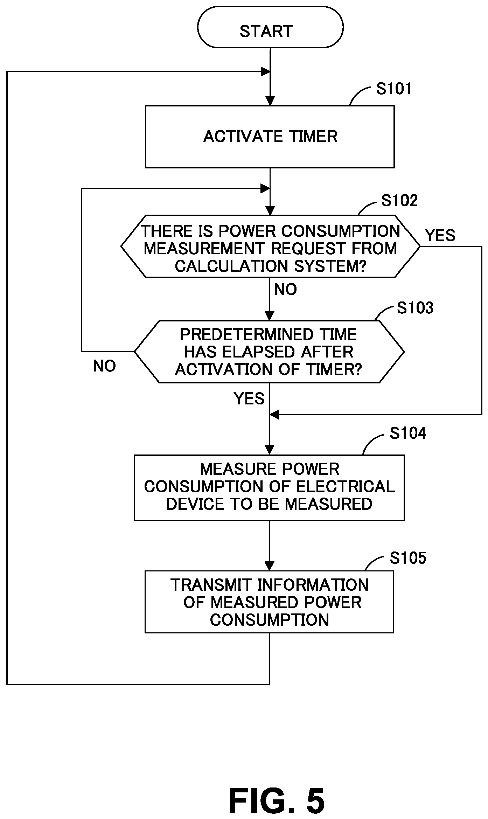

First, measurement processing, which is a process for achieving the function of the measurement unit 11 in the information processing device 40 included in the slave unit 14, will be described. Fig. 5 is a flowchart illustrating processing contents of an example of the measurement processing.

When the processing of Fig. 5 is started, first, in S101, a process of activating a timer (not illustrated) and starting clocking is performed. For this process, for example, a timer function of the CPU 41 is used. Then, in subsequent S102, a process of determining whether a request for measuring power consumption has been received from the calculation system 30 is performed. In this determination process, when it is determined that the request for measuring power consumption has been received (when the determination result is YES), the processing proceeds to S104. On the other hand, in this determination process, when it is determined that the request for measuring power consumption has not been received (when the determination result is NO), the processing proceeds to S103.

Note that this determination process in S102 may be a process of determining whether occurrence of a non-periodic power consumption measurement event for any electrical device 21 is detected. The request for measuring power consumption from the calculation system 30 is an example of such a non-periodic power consumption measurement event.

In S103, a process of determining whether a predetermined time has elapsed since the timer was activated by the most recently executed processing of S101 is performed. This determination process is performed by determining whether the elapsed time from the activation time clocked by the timer has reached a predetermined time. Note that this predetermined time corresponds to a time interval at which regular measurement is performed.

When it is determined in the determination process of S103 that the predetermined time has elapsed since the timer was activated (when the determination result is YES), the processing proceeds to S104. On the other hand, when it is determined in the determination process of S103 that the predetermined time has not elapsed since the timer was activated (when the determination result is NO), the processing returns to S102, and the determination process of S102 described above is repeated.

In step S104, a process of measuring power consumption of the electrical device 21 to be measured by the slave unit 14 including the information processing device 40 is performed. In this process, as described above, the actual measurement values of the applied voltage and the inflow current to the inverter 23 included in the electrical device 21 are acquired from the sensor 17, and these measurement values are multiplied to obtain the power consumption value of the electrical device 21. Here, a process of measuring power consumption of the rotary machine 22 and the inverter 23, which are components of the electrical device 21, may be performed as described above.

In step S105, a process of transmitting the information of power consumption obtained by the processing in step S104 to the master unit 15 through the daisy-chain connection of the data signal line 16 is performed. After this processing is completed, the processing returns to S101, and thereafter, the process of measuring power consumption and the process of transmitting power consumption are repeated.

The above processing is an example of the measurement processing, and the function of the measurement unit 11 is provided by performing this processing by the information processing device 40 included in the slave unit 14.

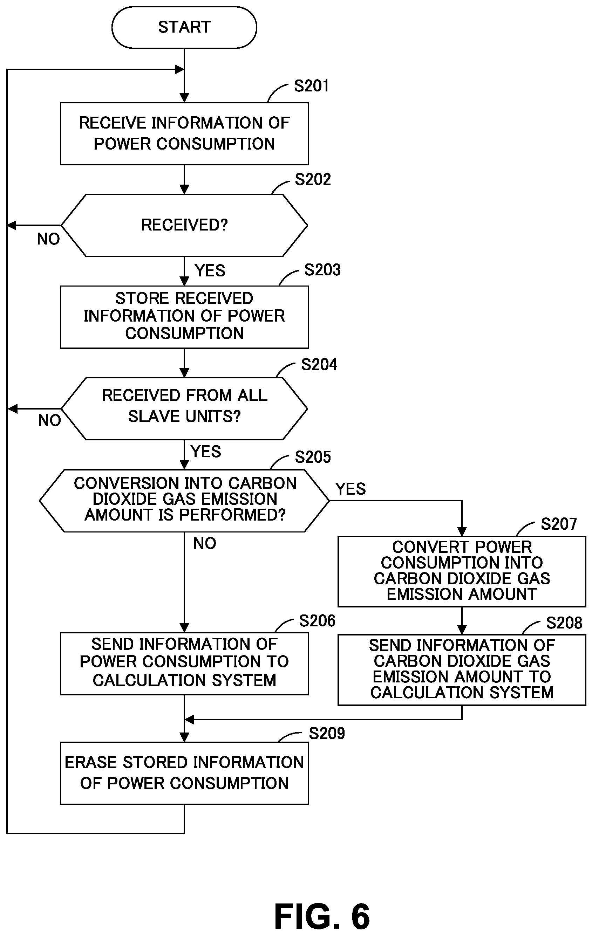

Next, collection processing, which is a process for achieving the function of the collection unit 12 in the information processing device 40 included in the master unit 15, will be described. Fig. 6 is a flowchart illustrating processing contents of an example of the collection processing.

When the processing of Fig. 6 is started, first, in S201, a process of receiving information of power consumption is performed, and in the following S202, a process of determining whether information of power consumption has been received is performed.

The information of power consumption received in the processing of S201 is information transmitted from the slave unit 14 when the information processing device 40 included in the slave unit 14 executes the processing of S105 in Fig. 5.

When it is determined in the determination process of S202 that the information of power consumption has been received (when the determination result is YES), the processing proceeds to S203. On the other hand, when it is determined in the determination process of S202 that the information of power consumption has not been received (when the determination result is NO), the processing steps of S201 and S202 are repeated until it is determined that the information of power consumption is received.

In S203, a process of storing the information of power consumption received from the slave unit 14 in S201 in the auxiliary storage device 43 is performed.

In step S204, a process of determining whether information of power consumption transmitted from all the slave units 14 included in the measurement system 10, that is, information of power consumption of all the electrical devices 21 included in the electric system 20 has been received is performed by the processing of S201. When it is determined in this determination process that the information of power consumption has been received from all of the slave units 14 (when the determination result is YES), the processing proceeds to S205. On the other hand, when it is determined in this determination process that there remains the slave unit 14 for which information of power consumption has not been received (when the determination result is NO), the processing returns to S201, and the processing steps of S201 to S204 are repeated until the information of power consumption is received from all the slave units 14.

In step S205, a process of determining whether the measurement system 10 performs a process of converting power consumption of the electrical device 21 measured by the slave unit 14 indicated by the information stored by the repetition of the processing of step S203 into an emission amount of carbon dioxide gas is performed.

In the present embodiment, it is assumed that information indicating whether this conversion is performed by the measurement system 10 or the calculation system 30 is registered in advance in the master unit 15, and the information is stored in the auxiliary storage device 43 of the information processing device 40. Then, in the determination process of S205, the determination is performed on the basis of the registered information.

When it is determined in the determination process of S205 that this conversion is performed by the measurement system 10 (when the determination result is YES), the processing proceeds to S207. On the other hand, when it is determined in the determination process of S205 that this conversion is performed by the calculation system 30 (when the determination result is NO), the process of sending the information of power consumption of each electrical device 21 to the calculation system 30 is performed in S206, and then the processing proceeds to S209.

In S207, a process of converting power consumption of each electrical device 21 included in the electric system 20 into an emission amount of carbon dioxide gas is performed. In the present embodiment, the conversion of power consumption into an emission amount of carbon dioxide gas is performed on the basis of data indicating the relationship between a generation amount of electric power and the emission amount of carbon dioxide gas in the supply source that supplies electric power to the electric system 20.

Here, a method of converting power consumption into an emission amount of carbon dioxide gas of the electrical device 21 will be described. The conversion of power consumption into an emission amount of carbon dioxide gas is performed using ratio data and emission amount coefficient data.

The ratio data is data indicating a ratio of supply power for each supply source with respect to electric power supplied from a plurality of supply sources to an installation place (for example, a factory) of the electric system 20. In addition, the emission amount coefficient data is data indicating the emission amount of carbon dioxide gas emitted in generation of a unit power amount in the supply source for each supply source.

In the processing of S207, first, for each power supply source, the emission amount coefficient for the supply source indicated by the emission amount coefficient data is multiplied by the ratio of the supply source indicated by the ratio data. Then, the emission amount coefficient at the installation place of the electric system 20, that is, the carbon dioxide gas emission amount per unit power consumption amount is calculated by summing the values of the multiplication results obtained for each power supply source. The emission amount coefficient at the installation place thus obtained is multiplied by the power consumption of each electrical device 21 included in the electric system 20 to calculate the emission amount of carbon dioxide gas for each electrical device 21.

Note that in the present embodiment, it is assumed that the emission amount coefficient data is provided from each power supply source. It is also assumed that the ratio data is provided from a power reception/transformation system as the power supply 24 that receives and transforms electric power supplied from each power supply source at the installation place of the electric system 20 and supplies electric power to the electric system 20. In the measurement system 10, each time the emission amount coefficient data or the ratio data is provided, the master unit 15 sends the emission amount coefficient data or the ratio data to each slave unit 14, and the slave unit 14 stores the received emission amount coefficient data or ratio data.

In step S208, a process of sending the information of the emission amount of carbon dioxide gas obtained by converting the power consumption of each electrical device 21 obtained by the processing of step S207 to the calculation system 30 is performed.

In S209, a process of erasing the information of power consumption of each electrical device 21 stored by repetition of the processing of S203 is performed, and thereafter, the processing returns to S201 and the above-described processing of S201 and subsequent steps are performed again.

The above processing is an example of the collection processing, and the information processing device 40 included in the master unit 15 performs this processing to provide the function of the collection unit 12.

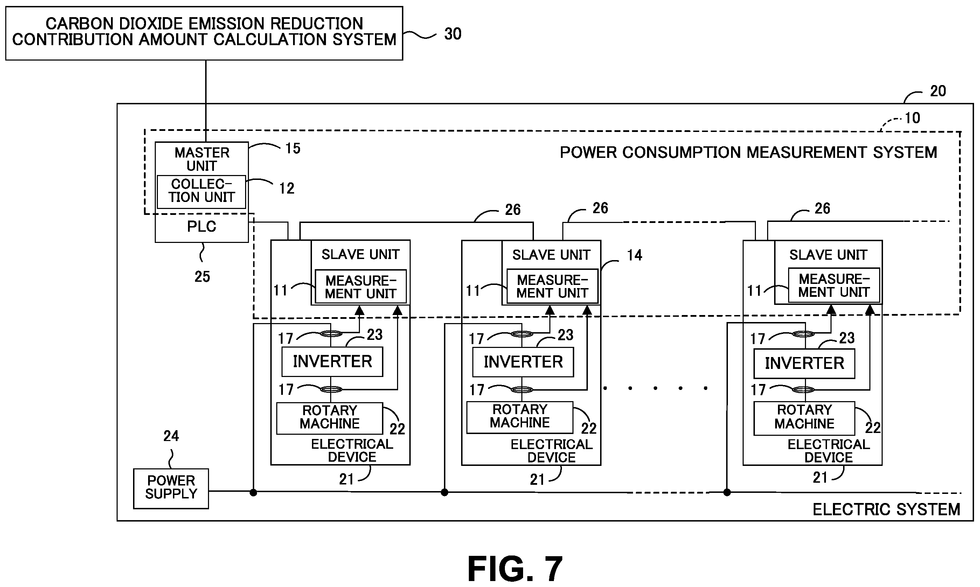

Next, a second example of the physical configuration of the measurement system 10 will be described with reference to Fig. 7.

The first example illustrated in Fig. 2 is a configuration having a daisy-chain connection for each of the data signal line 16 and the control signal line 26. Meanwhile, in the second example illustrated in Fig. 7, the daisy-chain connection for the control signal line 26 is shared as the data signal line 16. That is, in the second example, the PLC 25 controls the operation of the plurality of electrical devices 21 by sending control information transmitted through the control signal line 26 daisy-chain-connecting the plurality of electrical devices 21. On the other hand, the master unit 15 having the function of the collection unit 12 uses the control signal line 26 as the data signal line 16 to collect information of power consumption of the plurality of electrical devices 21 measured by the plurality of slave units 14 having the function of the measurement unit 11.

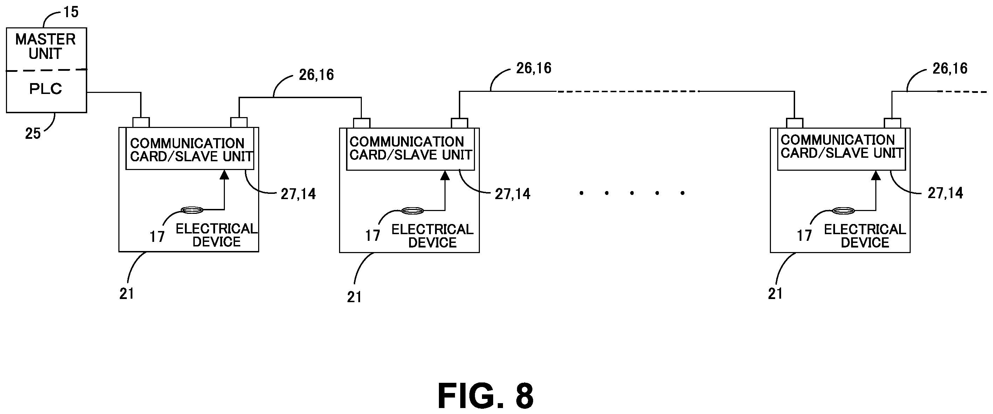

In order to achieve the configuration illustrated in Fig. 7, the installation mode of each of the slave unit 14 and the master unit 15 may be configured as in the second example illustrated in Fig. 8.

In the example of Fig. 8, the slave unit 14 having the function of the measurement unit 11 is included in the communication card 27 that is attached to electrical device 21 and provides a communication interface to the electrical device 21, and the master unit 15 having the function of the collection unit 12 is included in the PLC 25 that controls the operation of the electrical device 21. In this installation mode, it is easy to share the data signal line 16 with the daisy-chain connection of the control signal line 26.

Note that when this installation mode is adopted, for example, a hardware module corresponding to the slave unit 14 is incorporated in the communication card 27, and a hardware module corresponding to the master unit 15 is incorporated in the PLC 25. Here, the PLC 25 may be provided with software that causes the PLC 25 to perform the collection processing of Fig. 6 described above, and the PLC 25 may provide the function of the collection unit 12.

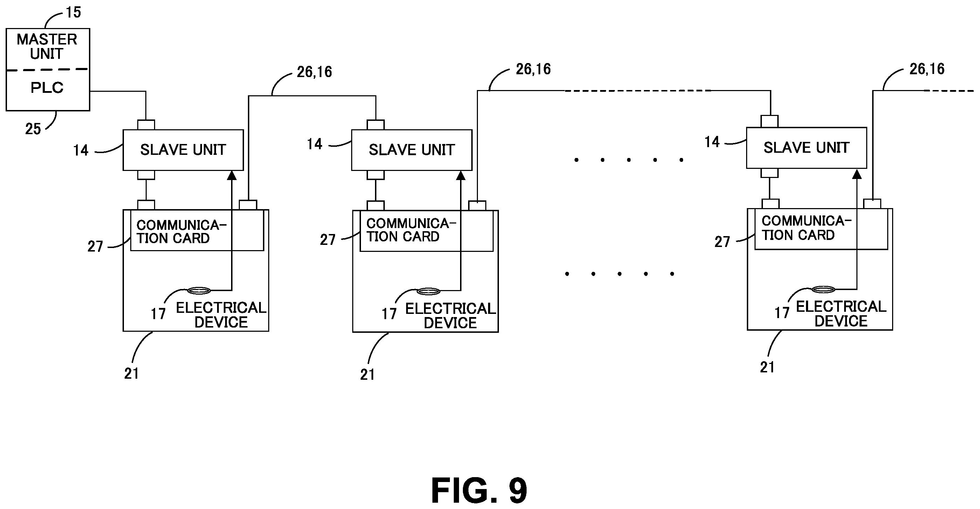

Furthermore, in order to achieve the configuration illustrated in Fig. 7, the installation mode of each of the slave unit 14 and the master unit 15 may be configured as in a third example illustrated in Fig. 9.

In the example of Fig. 9, the slave unit 14 is separated from the electrical device 21, and the slave unit 14 for measuring power consumption of the electrical device 21 is inserted on the upstream side of the daisy-chain connection of the control signal line 26 through which the communication card 27 attached to the electrical device 21 receives control information. In this installation mode, too, it is easy to share the data signal line 16 with the daisy-chain connection of the control signal line 26. Note that in this case, as in the example of Fig. 8, the PLC 25 includes, for example, a hardware module corresponding to the master unit 15 or includes software that causes the PLC 25 to perform collection processing, so that the PLC 25 provides the function of the collection unit 12.

In sharing the daisy-chain connection between the data signal line 16 and the control signal line 26, the control information is sent by the PLC 25, and the information of power consumption of each electrical device 21 is sent by each slave unit 14 using, for example, the above-described industrial Ethernet.

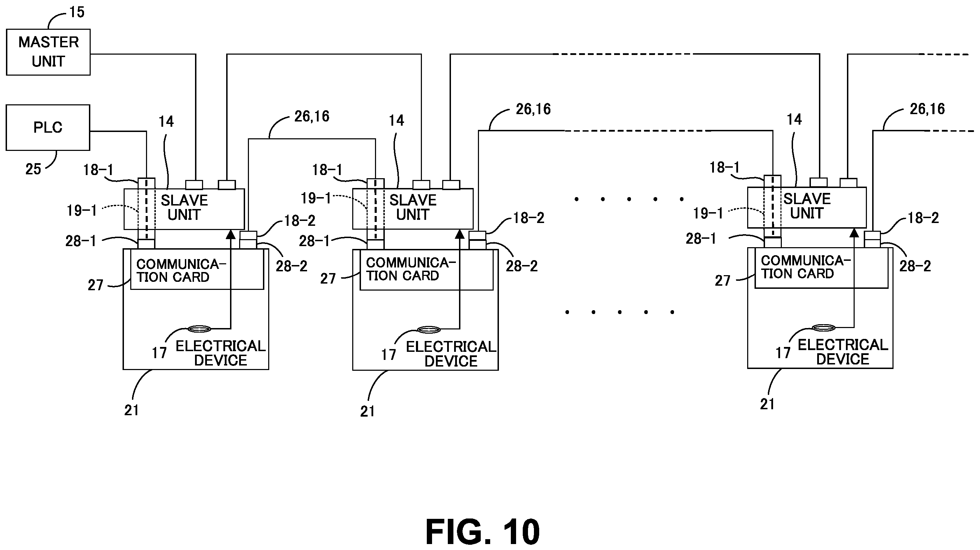

Note that in the third example illustrated in Fig. 9, a connector may be used for direct connection between the communication card 27 attached to the electrical device 21 and the slave unit 14, and the slave unit 14 may be coupled to and held by the electrical device 21 using the connector. Further, the slave unit 14 may be coupled to the electrical device 21 in an installation mode of the slave unit 14 as in a fourth example illustrated in Fig. 10.

In the fourth example illustrated in Fig. 10, the first receptacle 28-1 and the second receptacle 28-2 similar to those in the first example illustrated in Fig. 3 are provided in the electrical device 21. On the other hand, the slave unit 14 includes the first relay connector 19-1 similar to that in the example of Fig. 3, but does not include the second relay connector 19-2.

In the fourth example illustrated in Fig. 10, the first plug connector 18-1 is connected to the first receptacle 28-1 via the first relay connector 19-1 and the second plug connector 18-2 is directly connected to the second receptacle 28-2. In this example, the slave unit 14 is coupled to and held by electrical device 21 by connection between the first relay connector 19-1 and the first receptacle 28-1. In addition, by this connection, the connection between the first relay connector 19-1 and the first plug connector 18-1, and the connection between the second receptacle 28-2 and the second plug connector 18-2, the electrical device 21 is added to the daisy-chain connection for the control signal line 26. Such an installation mode of the slave unit 14 also eliminates the need for the mounting jig as described above.

Note that in the fourth example illustrated in Fig. 10, instead of the first relay connector 19-1, the slave unit 14 may include the second relay connector 19-2 similar to that in the first example illustrated in Fig. 3. In this case, the slave unit 14 is coupled to and held by electrical device 21 by connection between the second relay connector 19-2 and the second receptacle 28-2. Further, due to this connection, the connection between the second relay connector 19-2 and the second plug connector 18-2, and the connection between the first receptacle 28-1 and the first plug connector 18-1, the electrical device 21 is added to the daisy-chain connection for the control signal line 26.

As described above, the slave unit 14 may be coupled to the electrical device 21 by connecting the relay connector provided in the slave unit 14 and at least one of the plurality of receptacles provided in the electrical device 21 and to which the plurality of plug connectors provided on the control signal line 26 can be connected.

Next, details of the authentication processing unit 13 will be described.

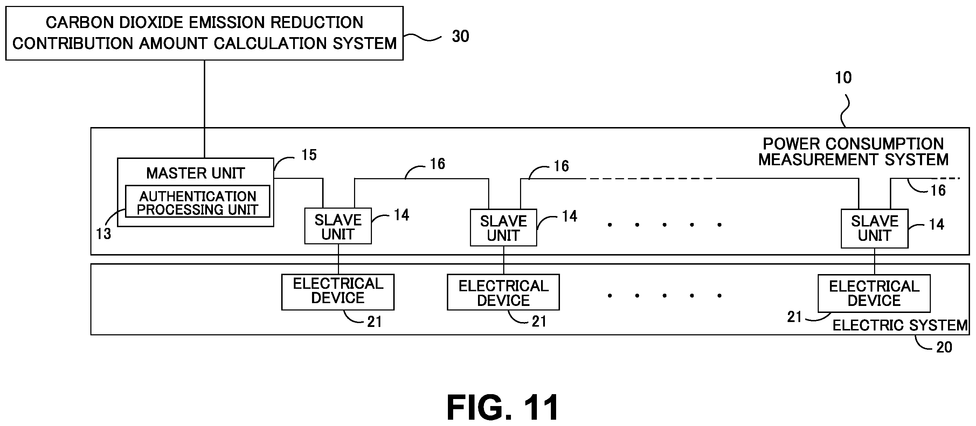

First, Fig. 11 will be described. Fig. 11 is a diagram illustrating a first arrangement example of the authentication processing unit 13, and is an example in a case where the master unit 15 has the function of the authentication processing unit 13.

In the case of the example of Fig. 11, the master unit 15 having the function of authentication processing unit 13 returns authentication information to the calculation system 30 in response to an acquisition request for authentication information of each of the electrical devices 21 constituting the electric system 20 transmitted from the calculation system 30.

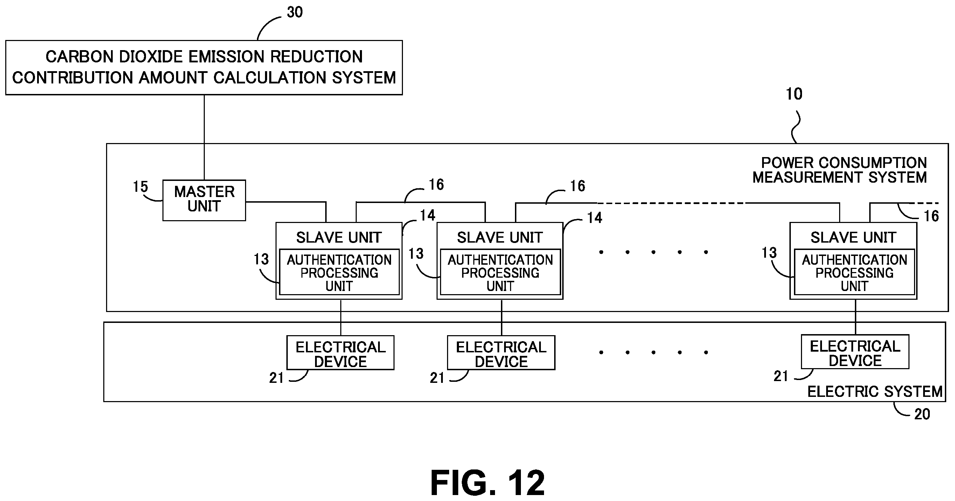

Note that instead of the master unit 15 having the function of the authentication processing unit 13, each of the plurality of slave units 14 may be configured to have the function of the authentication processing unit 13 as in a second arrangement example of the authentication processing unit 13 illustrated in Fig. 12.

In the case of the example of Fig. 12, the master unit 15 that has received acquisition request for authentication information transmitted from the calculation system 30 transfers the request to each slave unit 14 using the daisy-chain connection of the data signal line 16. The slave unit 14 having the function of the authentication processing unit 13 together with the function of the measurement unit 11 sends the authentication information of the electrical device 21 to be measured to the master unit 15 via the data signal line 16, and the master unit 15 returns the authentication information received from each slave unit 14 to the calculation system 30.

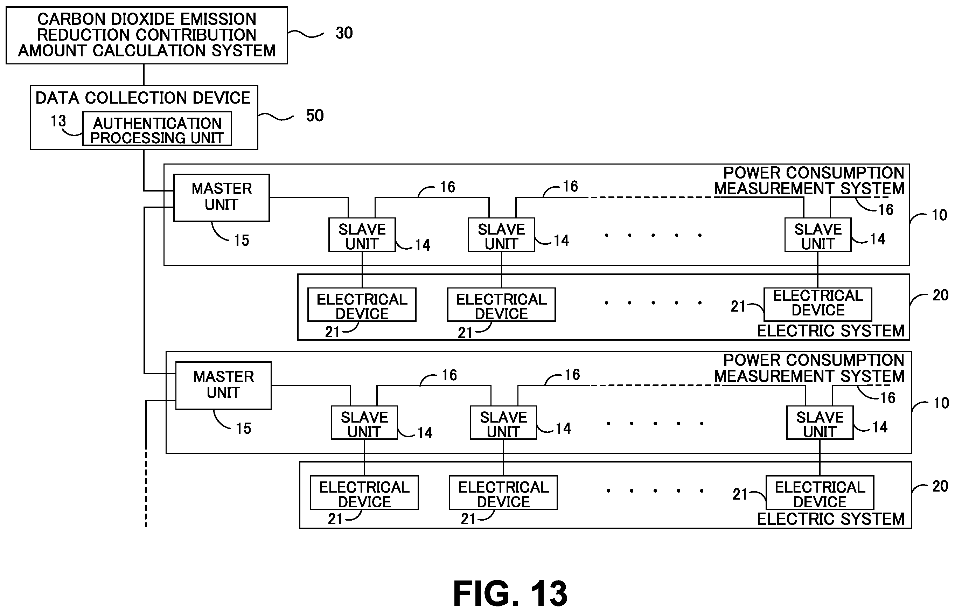

In addition, as in a third arrangement example of the authentication processing unit 13 illustrated in Fig. 13, a data collection device 50 may be configured to have the function of the authentication processing unit 13.

In the arrangement example of Fig. 13, a plurality of electric systems 20 are installed, and one measurement system 10 for measuring power consumption for each of the electric systems 20 is provided for each of the plurality of electric systems 20. The data collection device 50 is a device that collects, from the master unit 15 included in each of the measurement systems 10, information of power consumption of each electrical device 21 included in each of the plurality of electric systems 20, and sends the collected information of power consumption to the calculation system 30.

In a case where the data collection device 50 has the function of the authentication processing unit 13, when receiving an acquisition request for authentication information transmitted from the calculation system 30, the data collection device 50 returns the authentication information to the calculation system 30.

Note that in the present embodiment, the data collection device 50 includes the information processing device 40 of which the hardware configuration is illustrated in Fig. 4, and the function of the authentication processing unit 13 is implemented by the information processing device 40.

Meanwhile, in each of the configuration examples illustrated in Figs. 11, 12, and 13, similarly to the first example illustrated in Fig. 2, the data signal line 16 has a dedicated daisy-chain connection. Instead of this configuration, as in the second example illustrated in Fig. 7, the daisy-chain connection for the control signal line 26 may be shared as the data signal line 16.

Next, authentication processing that is a process of achieving the function of the authentication processing unit 13 in the master unit 15 in Fig. 11, the slave unit 14 in Fig. 12, or the data collection device 50 in Fig. 13 will be described.

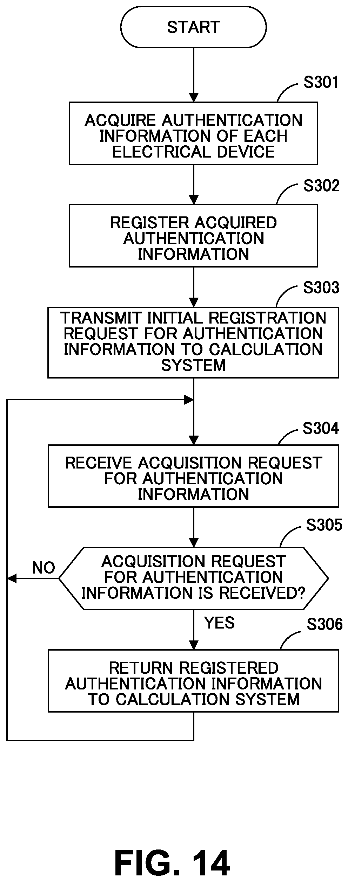

Fig. 14 is a flowchart illustrating processing contents of an example of the authentication processing. This authentication processing is achieved, for example, when the information processing device 40 included in the master unit 15, the slave unit 14, or the data collection device 50 reads and executes a predetermined program stored in advance in the auxiliary storage device 43 by the CPU 41.

The processing of Fig. 14 is started when installation of the electric system 20 and the measurement system 10 at the installation place is completed and these systems are activated. Then, first, in S301, a process of acquiring authentication information of each electrical device 21 constituting the electric system 20 is performed, and in subsequent S302, a process of registering the acquired authentication information is performed.

In a case where the information processing device 40 of the master unit 15 performs the authentication processing, the authentication information of the plurality of electrical devices 21 constituting the electric system 20 is collected via the slave unit 14 that measures the power consumption of electrical device 21 by the processing of S301. Then, the collected authentication information is stored in the auxiliary storage device 43 by the processing of S302.

On the other hand, in a case where the information processing device 40 of the slave unit 14 performs the authentication processing, the authentication information of the electrical device 21 whose power consumption is to be measured by the slave unit 14 is directly acquired by the processing of S301. Then, the collected authentication information is stored in the auxiliary storage device 43 by the processing of S302.

In a case where the information processing device 40 of the data collection device 50 performs the authentication processing, the authentication information of the plurality of electrical devices 21 constituting the plurality of electric systems 20 is collected via the slave unit 14 and the master unit 15 by the processing of S301. Then, the collected authentication information is stored in the auxiliary storage device 43 by the processing of S302.

Next, in S303, a process of transmitting an initial registration request of the authentication information of the electrical device 21 to the calculation system 30 is performed.

Next, in S304, a process of receiving an acquisition request for authentication information from the calculation system 30 is performed, and in subsequent S305, a process of determining whether an acquisition request for authentication information has been received is performed.

In a case where the information processing device 40 of the master unit 15 or the data collection device 50 performs the authentication processing, the master unit 15 or the data collection device 50 directly receives the acquisition request for authentication information sent from the calculation system 30. On the other hand, in a case where the information processing device 40 of the slave unit 14 performs the authentication processing, the acquisition request for authentication information sent from the calculation system 30 is received by the slave unit 14 via the master unit 15.

When it is determined in the determination process of S305 that the acquisition request for authentication information has been received (when the determination result is YES), the processing proceeds to S306. On the other hand, when it is determined in the determination process of S305 that the acquisition request for authentication information has not been received (when the determination result is NO), the processing returns to S304 and the process of receiving the acquisition request for authentication information is continued.

In step S306, a process of returning the authentication information of the electrical device 21 registered by the processing of step S302 to the calculation system 30 is performed, and thereafter, the processing is returned to S304 and the process of receiving an acquisition request for authentication information is performed again.

In a case where the information processing device 40 of the master unit 15 or the data collection device 50 performs the authentication processing, the authentication information of the electrical device 21 is directly sent from the master unit 15 or the data collection device 50 to the calculation system 30 by the processing of S306. On the other hand, in a case where the information processing device 40 of the slave unit 14 performs the authentication processing, the authentication information of the electrical device 21 is sent to calculation system 30 via the master unit 15.

The above processing is the authentication processing of Fig. 14.

As described above, in the present embodiment, the authentication processing unit 13 is provided in the measurement system 10 including the measurement unit 11 that measures power consumption of the electrical device 21 constituting the electric system 20 and the collection unit 12 that collects information of the measured power consumption and sends the information to the calculation system 30. The authentication processing unit 13 performs a process of returning authentication information for each of the plurality of electrical devices 21 in response to a request from the calculation system 30. Therefore, according to the measurement system 10, it is possible to provide the calculation system 30 with a material for determining whether there is a change in the electrical device 21 constituting the electric system 20.

Although the embodiment of the disclosure and advantages thereof have been described in detail above, those skilled in the art will be able to make various changes, additions, and omissions without departing from the scope of the present invention clearly described in the claims.

The present application is based on Japanese Patent Application No. 2024-132754 filed on August 8, 2024. All the contents are included herein.

### Reference Signs List

- 10: Power consumption measurement system
- 11: Measurement unit
- 12: Collection unit
- 13: Authentication processing unit
- 14: Slave unit
- 15: Master unit
- 16: Data signal line
- 17: Sensor
- 18-1: First plug connector
- 18-2: Second plug connector
- 19-1: First relay connector
- 19-2: Second relay connector
- 20: Electric system
- 21: Electrical device
- 22: Rotary machine
- 23: Inverter
- 24: Power supply
- 25: PLC
- 26: Control signal line
- 27: Communication card
- 28-1: First receptacle
- 28-2: Second receptacle
- 30: Carbon dioxide emission reduction contribution amount calculation system
- 40: Information processing device
- 41: CPU
- 42: Memory
- 43: Auxiliary storage device
- 44: Communication I/F
- 45: Sensor I/F
- 46: Calculation system I/F
- 47: Bus line
- 50: Data collection device

## Claims

1. A power consumption measurement system comprising:
a measurement unit that measures power consumption of each of a plurality of electrical devices constituting an electric system;
a collection unit that collects information of the power consumption measured by the measurement unit and sends the collected information of the power consumption to a calculation system that calculates an emission reduction contribution amount of carbon dioxide gas emitted by the electric system; and
an authentication processing unit that returns authentication information for each of the plurality of electrical devices in response to a request from the calculation system.

2. A power consumption measurement system comprising:
a slave unit including a measurement unit that measures power consumption of each of a plurality of electrical devices constituting an electric system;
a master unit including a collection unit that collects information of the power consumption measured by the measurement unit and sends the collected information of the power consumption to a calculation system that calculates an emission reduction contribution amount of carbon dioxide gas emitted by the electric system; and
an authentication processing unit that returns authentication information for each of the plurality of electrical devices in response to a request from the calculation system.

3. The power consumption measurement system according to claim 2, wherein:
the electric system includes a control unit that controls operation of the plurality of electrical devices by sending control information transmitted through a control signal line that connects the plurality of electrical devices;
each of the plurality of electrical devices includes a plurality of receptacles to which a plurality of plug connectors provided on the control signal line are connectable; and
the slave unit
includes a relay connector that relays the control information, the relay connector being capable of connecting at least one of the plurality of plug connectors and at least one of the plurality of receptacles, and
is coupled to the electrical device to be measured by the measurement unit of the slave unit by connecting the relay connector to at least one of the plurality of receptacles included in the electrical device to be measured.

4. The power consumption measurement system according to claim 2, wherein
one slave unit is provided in each of the plurality of electrical devices to be measured, and
the collection unit collects information of power consumption of each of the plurality of electrical devices measured by the measurement unit of the slave unit through a data signal line daisy-chain-connecting the plurality of electrical devices.

5. The power consumption measurement system according to claim 4, wherein
the electric system includes a control unit that controls operation of the plurality of electrical devices by sending control information transmitted through a control signal line daisy-chain-connecting the plurality of electrical devices;
each of the plurality of electrical devices includes first and second receptacles capable of connecting first and second plug connectors provided at ends of cables on an upstream side and a downstream side in the daisy-chain connection of the control signal line, respectively; and
the slave unit
includes a first or second relay connector that relays the control information, the first or second relay connector being capable of connecting either the first or second plug connector and either the first or second receptacle, and
is coupled to the electrical device to be measured by the measurement unit of the slave unit by connecting the first or second relay connector to either the first or second receptacle included in the electrical device to be measured.

6. The power consumption measurement system according to claim 4, wherein
the electric system includes a control unit that controls operation of the plurality of electrical devices by sending control information transmitted through a control signal line daisy-chain-connecting the plurality of electrical devices;
each of the plurality of electrical devices includes first and second receptacles capable of connecting first and second plug connectors provided at ends of cables on an upstream side and a downstream side in the daisy-chain connection of the control signal line, respectively; and
the slave unit
includes first and second relay connectors that relay the control information, the first and second relay connectors being capable of connecting the first and second plug connectors and the first and second receptacles, respectively, and
is coupled to the electrical device to be measured by the measurement unit of the slave unit by connecting the first and second relay connectors to the first and second receptacles included in the electrical device to be measured, respectively.

7. The power consumption measurement system according to claim 4, wherein
the electric system includes a control unit that controls operation of the plurality of electrical devices by sending control information transmitted through a control signal line daisy-chain-connecting the plurality of electrical devices, and
the collection unit collects information of power consumption of each of the plurality of electrical devices by sharing the control signal line that transmits the control information as the data signal line.

8. The power consumption measurement system according to any one of claims 2 to 7, wherein the master unit includes the authentication processing unit.

9. The power consumption measurement system according to any one of claims 4 to 7, wherein
the slave unit includes the authentication processing unit, and
the authentication processing unit of returns, via the data signal line, authentication information of the electrical device to be measured by the measurement unit of the slave unit.

10. The power consumption measurement system according to any one of claims 2 to 7, wherein the collection unit converts the power consumption measured by the measurement unit of the slave unit into an emission amount of the carbon dioxide gas, and sends information of the emission amount after conversion to the calculation system.

11. The power consumption measurement system according to claim 10, wherein the collection unit converts the power consumption measured by the measurement unit into the emission amount of carbon dioxide gas on the basis of data indicating a relationship between a generation amount of electric power in a supply source that supplies electric power to the electric system and the emission amount of carbon dioxide gas.
